# EUROPÄISCHE PATENTSCHRIFT

(11) **EP 1 572 780 B1**
(45) Veröffentlichungstag und Bekanntmachung des Hinweises auf die Patenterteilung: **30.07.2008**
(21) Anmeldenummer: 03808282.2
(22) Anmeldetag: 18.12.2003
(51) Int. Cl.: C08G 77/26, C08G 77/46, C08G 18/28, C08G 18/61

(54) **HYDROPHILE SILOXANCOPOLYMERE UND VERFAHREN ZU DEREN HERSTELLUNG**
HYDROPHILIC COPOLYSILOXANES AND METHOD FOR THE PRODUCTION THEREOF
COPOLYMERES DE SILOXANE HYDROPHILES ET LEUR PROCEDE DE PRODUCTION

(30) Priorität: 19.12.2002 DE 10259612; 18.09.2003 DE 10343203
(43) Veröffentlichungstag der Anmeldung: 14.09.2005
(73) Patentinhaber: Wacker Chemie AG, 81737 München (DE)
(72) Erfinder: HERZIG, Christian, 83329 Waging (DE); DORMEIER, Siegfried, 94166 Stubenberg (DE)
(86) Internationale Anmeldenummer: PCT/EP2003/014494
(87) Internationale Veröffentlichungsnummer: WO 2004/056907

(56) Entgegenhaltungen:
- WO-A-02/088209
- US-A- 5 543 171

## Beschreibung

Die Erfindung betrifft hydrophile Siloxancopolymere und ein Verfahren zu ihrer Herstellung.

US-A 5,001,210 beschreibt eine Methode zur Herstellung von Polyurethanen, bei der aminofunktionelle Siloxantelechele nach Umsatz mit cyclischen Carbonaten mit Di- oder Poly-isocyanaten in die Zielprodukte überführt werden. Polyether werden in Form von Diaminoopolyethern verwendet, die im Vergleich zu Polyetherdiolen und -monoolen teuer sind.

In EP-A 1 178 069 ist die Herstellung von Polyetherurethanzwischenstufen beschrieben, indem Alkenylpolyether mit Diisocyanaten umgesetzt werden und an diese Silane, die hydrolyseempfindliche Gruppen tragen, addiert werden. Siloxankettenpolymere sind so nicht erhältlich.

Verzweigte Polyethersiloxane sind aus Chemical Abstracts 136: 38808 bekannt. Hydrogensiloxane werden mit Divinylsiloxanen und Allylpolyether gleichzeitig umgesetzt. Überschüssige Polyethermengen verbleiben ungebunden im Produktgemisch. Die Produkte werden als Textilweichmacher verwendet und sind frei von Urethan- und Harnstoffgruppen.

In US 2003/0032726 bzw. der korrespondierenden WO 02/088209 (A. Andrew Shores) ist ein Reaktionsprodukt beschrieben aus (A) Polyisocyanat, (B) Silicon, das ein Dimethylpolysiloxansegment und eine oder mehrere Isocyanat-reaktive Gruppen enthält, (C) Reaktant mit einer oder mehreren Isocyanat-reaktiven Gruppen und einer oder mehreren ionisierbaren Gruppen und (D) gegebenenfalls einer organischen Substanz, die eine oder mehrere Isocyanat-reaktive Gruppen aber keine ionisierbare Gruppen enthält und (E) Verbindung, die das Gegenion für genannte ionisierbare Gruppen liefert, wobei entweder das Silicon (B) oder der Reaktant (C) oder beide eine einzige Isocyanat-reaktive Gruppe enthält.

In US 2003/0032751 (A. Andrew Shores) ist ein Reaktionsprodukt beschrieben aus (A) Polyisocyanat, (B) Silicon, das ein Dimethylpolysiloxansegment und eine oder mehrere Isocyanat-reaktive Gruppen enthält, (C) Reaktant mit einer oder mehreren Isocyanat-reaktiven Gruppen und einer oder mehreren ionisierbaren Gruppen und (D) gegebenenfalls einer organischen Substanz, die eine oder mehrere Isocyanat-reaktive Gruppen aber keine ionisierbare Gruppen enthält und (E) Verbindung, die das Gegenion für genannte ionisierbare Gruppen liefert, wobei das durchschnittliche Molekulargewicht des Reaktionsproduktes 600 bis 20 000 ist.

Es bestand die Aufgabe hydrophile Siloxancopolymere bereitzustellen, wobei die hydrophilen Segmente oder Blöcke durch organische Gruppen unterbrochen sind, die als Donoren oder Akzeptoren bei der Ausbildung von Wasserstoffbrücken wirken. Weiterhin bestand die Aufgabe hydrophile Siloxancopolymere bereitzustellen, die in einem einfachen Verfahren herstellbar sind und die in Wasser leicht zu dispergieren sind, insbesondere selbstdispergierend sind, d.h. ohne Mitverwendung von Emulgatoren eine Emulsion, insbesondere Microemulsion, bilden. Die Aufgabe wird durch die Erfindung gelöst.

Gegenstand der Erfindung sind hydrophile Siloxancopolymere herstellbar indem
in einem ersten Schritt
Organopolysiloxane (1), die pro Molekül mindestens ein Si-gebundenes Wasserstoffatom, vorzugsweise mindestens zwei Si-gebundene Wasserstoffatome, aufweisen, mit
weitgehend linearen oligomeren oder polymeren Verbindungen (2) der allgemeinen Formel

R¹- (A-CₙH₂ₙ)ₘ-A¹-H (I),

wobei R¹ einen einwertigen gegebenenfalls substituierten Kohlenwasserstoffrest bedeutet, an den Si-H-Gruppen in einer Hydrosilylierungsreaktion angelagert werden können, vorzugsweise einen aliphatische C-C-Mehrfachbindung aufweisenden Kohlenwasserstoffrest bedeutet,
A einen zweiwertigen, polaren organischen Rest ausgewählt aus der Gruppe von -O- , -C(O)-O- , -O-C(O)- , -O-C(O)-O- ,
-C(O)-NH- , -NH-C(O)- , Urethanrest und Harnstoffrest, vorzugsweise ein Sauerstoffatom -O-, bedeutet,
A¹ einen zweiwertigen, polaren organischen Rest ausgewählt aus der Gruppe von -O- , -NH- und -NR'- (wobei R' einen einwertigen Kohlenwasserstoffrest mit 1 bis 18 Kohlenstoffatomen bedeutet), vorzugsweise ein Sauerstoffatom -O-, bedeutet,
n eine ganze Zahl von 1 bis 20, vorzugsweise 1 bis 4, bevorzugt 2 oder 3, ist und
m eine ganze positive Zahl, vorzugsweise 5 bis 50, ist, umgesetzt werden,
und in einem zweiten Schritt
die so erhaltenen H-A¹-Gruppen aufweisenden Zwischenprodukte
(4) mit organischen Verbindungen (5), die pro Molekül mindestens zwei Isocyanatgruppen aufweisen, umgesetzt werden, mit der Maßgabe, dass der Wassergehalt der zur Herstellung der hydrophilen Siloxancopolymere eingesetzten Verbindungen (1) und (2) niedriger ist als 2000 Gew.-ppm, vorzugsweise niedriger ist als 1500 Gew.-ppm, bevorzugt niedriger ist als 1000 Gew.-ppm, jeweils bezogen auf das Gesamtgewicht von Verbindungen (1) und (2), und dass die organischen Verbindungen (5), die pro Molekül mindestens zwei Isocyanatgruppen aufweisen, in Mengen von 0,5 bis 1,0 Mol Isocyanatgruppe je Mol H-A¹-Gruppe im Zwischenprodukt (4) eingesetzt werden.

Der Wassergehalt bezieht sich auf Raumtemperatur (20°C) und dem Druck der umgebenden Atmosphäre (1020 hPa).

Die erfindungsgemäßen Siloxancopolymere besitzen eine Viskosität von vorzugsweise 1 000 bis 100 000 000 mPa·s bei 25°C, bevorzugt 10 000 bis 10 000 000 mPa·s bei 25°C.

Gegenstand der Erfindung ist weiterhin ein Verfahren zur Herstellung von hydrophilen Siloxancopolymeren indem in einem ersten Schritt
Organopolysiloxane (1), die pro Molekül mindestens ein Si-gebundenes Wasserstoffatom, vorzugsweise mindestens zwei Si-gebundene Wasserstoffatome, aufweisen, mit
weitgehend linearen oligomeren oder polymeren Verbindungen (2) der allgemeinen Formel

R¹- (A-CₙH₂ₙ)ₘ-A¹-H (I),

wobei R¹ einen einwertigen gegebenenfalls substituierten Kohlenwasserstoffrest bedeutet, an den Si-H-Gruppen in einer Hydrosilylierungsreaktion angelagert werden können, vorzugsweise einen aliphatische C-C-Mehrfachbindung aufweisenden Kohlenwasserstoffrest bedeutet,
A einen zweiwertigen, polaren organischen Rest ausgewählt aus der Gruppe von -O- , -C(O)-O- , -O-C(O)- , -O-C(O)-O- ,
-C(O)-NH- , -NH-C(O)- , Urethanrest und Harnstoffrest, vorzugsweise ein Sauerstoffatom -O-, bedeutet,
A¹ einen zweiwertigen, polaren organischen Rest ausgewählt aus der Gruppe von -O- , -NH- und -NR²- (wobei R² einen einwertigen Kohlenwasserstoffrest mit 1 bis 18 Kohlenstoffatomen bedeutet), vorzugsweise ein Sauerstoffatom -O-, bedeutet,
n eine ganze Zahl von 1 bis 20, vorzugsweise 1 bis 4, bevorzugt 2 oder 3, ist und
m eine ganze positive Zahl, vorzugsweise 5 bis 50, ist, umgesetzt werden,
und in einem zweiten Schritt
die so erhaltenen H-A¹-Gruppen aufweisenden Zwischenprodukte
(4) mit organischen Verbindungen (5), die pro Molekül mindestens zwei Isocyanatgruppen aufweisen, umgesetzt werden, mit der Maßgabe, dass der Wassergehalt der zur Herstellung der hydrophilen Siloxancopolymere eingesetzten Verbindungen (1) und (2) niedriger ist als 2000 Gew.-ppm, vorzugsweise niedriger ist als 1500 Gew.-ppm, bevorzugt niedriger ist als 1000 Gew.-ppm, jeweils bezogen auf das Gesamtgewicht von Verbindungen (1) und (2), und dass die organischen Verbindungen (5), die pro Molekül mindestens zwei Isocyanatgruppen aufweisen, in Mengen von 0,5 bis 1,0 Mol Isocyanatgruppe je Mol H-A¹-Gruppe im Zwischenprodukt (4) eingesetzt werden.

Im ersten Verfahrensschritt werden als Organopolysiloxane (1) vorzugsweise lineare, cyclische oder verzweigte Organopolysiloxane aus Einheiten der allgemeinen Formel

RₑH_{f}SiO_{4-e-f} (II),

wobei
R gleich oder verschieden sein kann und einen einwertigen, gegebenenfalls substituierten Kohlenwasserstoffrest mit 1 bis 18 Kohlenstoffatom(en) je Rest bedeutet,
e 0, 1, 2 oder 3,
f 0, 1 oder 2
und die Summe von e+f 0, 1, 2 oder 3 ist,
mit der Maßgabe, dass pro Molekül mindestens ein Si-gebundenes Wasserstoffatom, bevorzugt mindestens 2 Si-gebundene Wasserstoffatome vorliegen, verwendet.

Bevorzugt werden als Organopolysiloxane (1) solche der allgemeinen Formel

H_{g}R_{3-g}SiO(SiR₂O)ₒ(SiRHO)ₚSiR_{3-g}H_{g} (III)

wobei R die oben dafür angegebene Bedeutung hat,
g 0, 1 oder 2,
o 0 oder eine ganze Zahl von 1 bis 1500 und
p 0 oder eine ganze Zahl von 1 bis 200 ist,
mit der Maßgabe, dass pro Molekül mindestens ein Si-gebundenes Wasserstoffatom, bevorzugt mindestens zwei Si-gebundene Wasserstoffatome, vorliegen, verwendet.

Im Rahmen dieser Erfindung soll Formel (III) so verstanden werden, dass o Einheiten -(SiR₂O)- und p Einheiten -(SiRHO)- in beliebiger Weise im Organopolysiloxanmolekül verteilt sein können.

Besonders bevorzugt ist g in Formel (III) 1 und p in Formel (III) 0 und es werden als Organopolysiloxane (1) α,ω-Dihydrogenpolydiorganosiloxane, insbesondere α,ω-Dihydrogenpolydimethylsiloxane, eingesetzt.

Die Organopolysiloxane (1) besitzen vorzugsweise eine durchschnittliche Viskosität von 10 bis 1 000 mPa.s bei 25°C, bevorzugt 50 bis 1000 mPa.s bei 25°C und besonders bevorzugt 60 bis 600 mPa.s bei 25°C.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 6 Kohlenstoffatomen, wobei der Methylrest besonders bevorzugt ist.

Beispiele für Reste R gelten im vollen Umfang für Reste R'.

R¹ bedeutet vorzugsweise einen einwertigen, Kohlenwasserstoffrest mit aliphatischer C-C-Mehrfachbindung.

Beispiele für Reste R¹ sind Alkenylreste, wie der Vinyl-, 5-Hexenyl-, Cyclohexenyl-, 1-Propenyl-, Allyl-, 3-Butenyl- und 4-Pentenylrest, und Alkinylreste, wie der Ethinyl-, Propargyl- und 1-Propinylrest.

Bevorzugt handelt es sich bei dem Rest R¹ um einen Alkenylreste, insbesondere ω-Alkenylrest, wobei der Allylrest besonders bevorzugt ist.

Bevorzugt als oligomere oder polymere Verbindungen (2) sind Polyether der allgemeinen Formel

H₂C=CH-R²- (OCₙH₂ₙ)ₘ-OH (IV),

wobei R² ein zweiwertiger Kohlenwasserstoffrest mit 1 bis 10 Kohlenstoffatomen, bevorzugt ein Rest der Formel -CH₂- ,
-CH(CH₃)- oder -C(CH₃)₂- ist und
n und m die oben dafür angegebene Bedeutung haben.

Bevorzugte Beispiele für Polyether (2) sind solche der allgemeinen Formel

H₂C=CH-R²-(OCH₂CH₂)ₐ[OCH₂CH(CH₃)]_{b}-OH (IV'),

wobei R² die oben dafür angegebene Bedeutung hat und a und b 0 oder eine ganze Zahl von 1 bis 200 ist, mit der Maßgabe, dass die Summe a+b mindestens 1 ist, vorzugsweise 5 bis 50 ist.

Weitere Beispiele für oligomere oder polymere Verbindungen (2) sind ungesättigte Polyester, wie H₂C=CH-R²-[O(O)CCₙH₂ₙ]ₘ-OH, ungesättigte Polycarbonate, wie H₂C=CH-R²-[OC(O)OCₙH₂ₙ]ₘ-OH und ungesättigte Polyamide, wie H₂C=CH-R²- [NHC (O) CₙH₂ₙ]ₘ-NH₂, wobei R², n und m die oben dafür angegebene Bedeutung haben.

Die Verbindungen (2) werden im ersten Verfahrensschritt vorzugsweise in Mengen von 1,0 bis 4,0, bevorzugt 1,3 bis 2,5 Mol Rest R¹, der vorzugsweise ein Rest mit aliphatischer C-C-Mehrfachbindung ist, bevorzugt ein ω-Alkenylrest ist, je Grammatom Si-gebundenem Wasserstoff im Organopolysiloxan (1) eingesetzt.

Im ersten Verfahrensschritt werden vorzugsweise die Anlagerung von Si-gebundenem Wasserstoff an aliphatische Mehrfachbindung fördernde Katalysatoren (3) eingesetzt. Als Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus H₂PtCl₆*6H₂O und Cyclohexanon, Platin-Vinyl-siloxankomplexe, wie Platin-1,3-Divinyl-1,1,3,3-tetramethyl-disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator (3) wird im ersten Verfahrensschritt vorzugsweise in Mengen von 1 bis 50 Gew.-ppm (Gewichtsteilen je Million Gewichtsteilen), bevorzugt in Mengen von 2 bis 20 Gew.-ppm, jeweils berechnet als elementares Platin und bezogen auf das Gesamtgewicht der Organopolysiloxane (1) und Verbindungen (2) eingesetzt.

Der erste Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der erste Verfahrensschritt vorzugsweise bei einer Temperatur von 60°C bis 140°C, bevorzugt 80°C bis 120°C, durchgeführt.

Im zweiten Verfahrensschritt werden als organische Verbindungen (5), die pro Molekül mindestens zwei Isocyanatgruppen aufweisen, bevorzugt solche der allgemeinen Formel

O=C=N-R³-N=C=O (V),

wobei R³ einen zweiwertigen Kohlenwasserstoffrest mit 4 bis 40 Kohlenstoffatomen je Rest bedeutet, eingesetzt.

Beispiele für organische Verbindungen (5) sind Hexamethylen-1,6-diisocyanat, Isophorondiisocyanat, Tolylen-2,4-diisocyanat, Tolylen-2,6-diisocyanat, Phenylen-1,3-diisocyanat, 4,4'-Methylen-bis(cyclohexylisocyanat), 4,4'-Methylen-bis(phenylisocyanat) und Dimethylphenyldiisocyanat.

Organische Verbindungen (5) werden im zweiten Verfahrensschritt vorzugsweise in Mengen von 0,8 bis 1,0 Mol Isocyanatgruppe je Mol H-A¹-Gruppe im Zwischenprodukt (4) eingesetzt.

In den eingangs erwähnten US 2003/0032726 und US 2003/0032751 wird Polyisocyanat immer im deutlichen Überschuss verwendet, im Gegensatz zu dem erfindungsgemäßen Verfahren. Von geringeren Mengen wird in den eingangs erwähnten US-Schriften abgeraten, da sie die Viskosität des Produktes erhöhen, was damit schwierig zu handhaben ist und ein Lösungsmittel erforderlich macht. Es herrscht damit ein deutliches Vorurteil gegen die erfindungsgemäße Verwendung des Polyisocyanates (5) im Unterschuss von 0,5 bis 1,0 Mol.

Für die Umsetzung im zweiten Schritt des erfindungsgemäßen Verfahrens werden vorzugsweise Kondensationskatalysatoren (6), wie Di-n-butylzinndilaurat, Zinn-II-octoat, Dibutylzinndiacetat, Kaliumoctoat oder tert. Amine, wie Dimethylcyclohexylamin, Dimethylaminopropyldipropanolamin, Pentamethyldipropylentriamin, N-Methylimidazol oder N-Ethylmorpholin, eingesetzt.

Ein bevorzugtes Siloxancopolymer wird erhalten, indem im ersten Verfahrensschritt ein α,ω-Dihydrogenpolydiorganosiloxan (1) im Überschuss mit einem Polyether (2) der Formel (IV) umgesetzt wird und im zweiten Verfahrensschritt das Zwischenprodukt (4), ein HO-Polyether-Polysiloxan-Polyether-OH, mit einem Diisocyanat (5) der Formel (V) umgesetzt wird, wobei UrethanGruppen in das Siloxancopolymer eingeführt werden. Auch freier Polyether aus dem 1. Schritt wird dabei durch Urethanbildung gebunden:

CH₂=CH-R²- (OCₙH₂ₙ) ₘ-OC (O)NH-R³-NHC (O) O [ (CₙH₂ₙO) ₘ-R²-CH₂CH₂-R₂SiO (R₂SiO) ₒ-R₂SiO-CH₂CH₂-R²- (OCₙH₂ₙ)ₘ-OC (O) NH-R³-NHC (O)O]ₓ(CₙH₂ₙO)ₘ-R²-CH=CH₂ (VI),

wobei R, R², R³, n, m und o die oben dafür angegebene Bedeutung haben und x 0 oder eine ganze Zahl von 1 bis 20, vorzugsweise 0 oder eine ganze Zahl von 1 bis 4 ist.

Die Urethangruppen in den erfindungsgemäßen hydrophilen Siloxancopolymeren können als Donoren und Akzeptoren bei der Ausbildung von Wasserstoffbrücken wirken.

Im zweiten Schritt des erfindungsgemäßen Verfahrens können zusätzlich zu den organischen Verbindungen (5) noch weitere Verbindungen (7), die gegenüber Isocyanatgruppen reaktiv sind, eingesetzt werden. Beispiele für weitere Verbindungen (7) sind solche ausgewählt aus der Gruppe der Formeln

R⁴-(A-CₙH₂ₙ)ₘ-A¹-H (VII),

HO-R⁵-NR⁴-R⁵-OH (VIII),

HO-R⁵-NR⁴₂ (IX),

HO-R⁶(NR⁴₂)₂ (X),

HO-R⁷(NR⁴₂)₃ (XI),

(HO)₂R⁶-NR⁴₂ (XII),

HNR⁴₂ (XIII)

wobei R⁴ ein Wasserstoffatom oder einen Rest R, der gegebenenfalls ein oder mehrere Stickstoffatom enthalten kann, bedeutet,
R⁵ einen zweiwertigen Kohlenwasserstoffrest mit 1 bis 10 Kohlenstoffatomen je Rest bedeutet,
R⁶ einen dreiwertigen organischen Rest mit 1 bis 100 Kohlenstoffatomen je Rest, vorzugsweise einen dreiwertigen Kohlenwasserstoffrest mit 1 bis 100 Kohlenstoffatomen, der ein oder mehrere Sauerstoffatome enthält,
R⁷ einen vierwertigen organischen Rest mit 1 bis 100 Kohlenstoffatomen je Rest, vorzugsweise einen vierwertigen Kohlenwasserstoffrest mit 1 bis 100 Kohlenstoffatomen, der ein oder mehrere Sauerstoffatome enthält, und
A¹, n und m die oben dafür angegebene Bedeutung haben.

Beispiele für Verbindungen der Formel (VII) sind Methylpolyethylenoxid, Butylpolyethylenoxid, Methylpolyethylenoxid/polypropylenoxid und Methylpolypropylenoxid.

Beispiele für Verbindungen der Formel (VIII) sind N-Methyldiethanolamin, N-Methyldipropanolamin, Dimethylaminopropyldipropanolamin, N-Dodecyldiethanolamin und N-Stearyldipropanolamin.

Beispiele für Verbindungen der Formel (IX) sind N,N-Dimethylethanolamin, N,N-Diethylpropanolamin, N,N-Dimethylaminopropyl-methylethanolamin und Dimethyl-2-(2-aminoethoxy)ethanol.

Beispiele für Verbindungen der Formel (X) sind 1,5-Bis(dimethylamino)-pentan-3-ol, 1,5-Bis(methylamino)-pentan-3-ol, 1,7-Bis(dimethylamino)-heptan-4-ol und N,N-Bis-(3-dimethylaminopropyl)-N-isopropanolamin

Beispiele für Verbindungen der Formel (XI) sind 2,4,6-Tris(dimethylaminomethyl)-phenol, 1,1,1-Tris(dimethylaminomethyl)-methanol und 2,4,6- Tris(dimethylaminomethyl)-cyclohexanol.

Beispiele für Verbindungen der Formel (XII) sind N,N-Bis(dimethylaminopropyl)-3-aminopropan-1,2-diol, N,N-Bis(dimethylaminopropyl)-2-aminopropan-1,3-diol, N,N-Bis(3-dimethylaminopropyl)-carbaminosäuremonoglycerid,

Beispiele für Verbindungen der Formel (XIII) sind Dibutylamin, Octylamin, Benzylamin, 3-(Cyclohexylamino)-propylamin, 2-(Diethylamino)-ethylamin, Dipropylentriamin, Isophorondiamin, Dimethylaminopropylmethylamin, Aminopropylmorpholin, N,N-Bis(dimethylaminopropyl)amin, Dimethylaminopropylamin.

Verbindungen der Formel (VIII) bis (XIII) bieten die Möglichkeit in dem Siloxancopolymer protonierbaren Stickstoff einzubauen.

Verbindungen der Formel (VII) werden im zweiten Verfahrensschritt in Mengen von vorzugsweise 0 bis 2 Mol, bevorzugt 0 bis 1 Mol, H-A¹-Gruppe je Mol H-A¹-Gruppe in Verbindung (2) eingesetzt.

Verbindungen der Formel (VIII) werden im zweiten Verfahrensschritt in Mengen von vorzugsweise 0 bis 2 Mol, bevorzugt 0 bis 1 Mol, HO-Gruppe je Mol H-A¹-Gruppe in Verbindung (2) eingesetzt.

Verbindungen der Formel (IX) werden im zweiten Verfahrensschritt in Mengen von vorzugsweise 0 bis 2 Mol, bevorzugt 0 bis 1 Mol, HO-Gruppe je Mol H-A¹-Gruppe in Verbindung (2) eingesetzt.

Verbindungen der Formel (X) werden im zweiten Verfahrensschritt in Mengen von vorzugsweise 0 bis 2 Mol, bevorzugt 0 bis 1 Mol, HO-Gruppe je Mol H-A¹-Gruppe in Verbindung (2) eingesetzt.

Verbindungen der Formel (XI) werden im zweiten Verfahrensschritt in Mengen von vorzugsweise 0 bis 2 Mol, bevorzugt 0 bis 1 Mol, HO-Gruppe je Mol H-A¹-Gruppe in Verbindung (2) eingesetzt.

Verbindungen der Formel (XII) werden im zweiten Verfahrensschritt in Mengen von vorzugsweise 0 bis 2 Mol, bevorzugt 0 bis 1 Mol, HO-Gruppe je Mol H-A¹-Gruppe in Verbindung (2) eingesetzt.

Verbindungen der Formel (XIII) werden im zweiten Verfahrensschritt in Mengen von vorzugsweise 0 bis 2 Mol, bevorzugt 0 bis 1 Mol, HN-Gruppe je Mol H-A¹-Gruppe in Verbindung (2) eingesetzt.

Auch bei der Verwendung von Verbindungen (7) wird Polyisocyanat (5) vorzugsweise im Unterschuss eingesetzt, um ein sicheres Abreagieren der gesundheitsgefährdenden Isocyanatgruppen zu gewährleisten. Organische Verbindungen (5) werden daher im zweiten Verfahrensschritt vorzugsweise in Mengen von 0,5 bis 1,0 Mol, bevorzugt 0,8 bis 1,0 Mol, Isocyanatgruppe je Mol der Summe mit Isocyanatgruppen reagierender Funktionen aus der Summe von Zwischenprodukt (4) und Verbindungen (7) eingesetzt.

Der zweite Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der zweite Verfahrensschritt vorzugsweise bei einer Temperatur von 40°C bis 140°C, bevorzugt 60°C bis 100°C, durchgeführt.

Zur Erniedrigung der teilweise sehr hohen Produktviskositäten können gegebenenfalls niedermolekulare Stoffe, wie Alkohole oder Ether zugesetzt werden. Beispiele hierfür sind Ethanol, Isopropanol, n-Butanol, 2-Butoxyethanol, Diethylenglycolmonobutylether, Tetrahydrofuran, Diethylenglycoldiethylether und Dimethoxyethan, wobei Diethylenglycolmonobutylether ein bevorzugtes Beispiel ist. Bevorzugte Zusatzmengen sind im Fall sehr viskoser Produkte bis zu 50 Gew.-%, besonders bevorzugt bis zu 30 Gew.-%, bezogen auf die erfindungsgemäßen hydrophilen Siloxancopolymere. Derartige Zusätze haben außerdem den Vorteil, dass die daraus entstehenden Produkte in Wasser leichter dispergierbar sind als die reinen Siloxancopolymere.

Die erfindungsgemäßen Siloxancopolymere können leicht in Wasser ohne weitere Hilfsstoffe, wie Emulgatoren, dispergiert werden, sind damit selbstdispergierend, und ergeben Emulsionen, insbesondere Microemulsionen.

Gegenstand der Erfindung sind daher Emulsionen, vorzugsweise Microemulsionen, enthaltend
(A) erfindungsgemäße hydrophile Siloxancopolymere und
(B) Wasser.

Die Emulsion enthält vorzugsweise 20 bis 60, bevorzugt 30 bis 50 Gew.-% der erfindungsgemäßen hydrophilen Siloxancopolymere (A).

Gegenstand der Erfindung ist weiterhin ein Verfahren zur Herstellung der Emulsionen, vorzugsweise Microemulsionen, durch Vermischen von
(A) erfindungsgemäßen hydrophilen Siloxancopolymeren mit
(B) Wasser.

Technologien zur Herstellung von Siliconemulsionen sind bekannt. Üblicherweise erfolgt die Herstellung durch einfaches Verrühren der erfindungsgemäßen Siloxancopolymere mit Wasser und gegebenenfalls anschließendes Homogenisieren mit Rotor-Stator-Homogenisatoren, Kolloidmühlen oder Hochdruckhomogenisatoren.

### Beispiel 1:

491 g eines α,ω-Dihydrogenpolydimethylsiloxans mit 0,055 Gew.-% Si-gebundenem Wasserstoff und einem Wassergehalt von 50 Gew.-ppm werden mit 1001 g eines Allyalkoholethoxylat/propyloxylats der Formel

H₂C=CH-CH₂- (OCH₂CH₂)ₐ[OCH₂CH (CH₃)]_{b}-OH ,

mit einem Verhältnis a : b = 1,0, einem Wassergehalt von 978 Gew.-ppm und einer Jodzahl von 13,7 (als Jodzahl wird die Zahl bezeichnet, welche die bei der Addition an die aliphatische Mehrfachbindung verbrauchte Jodmenge in Gramm pro 100 Gramm eingesetztes, zu untersuchendes Material angibt) vermischt, die Mischung wird auf 100°C erwärmt und zur Mischung werden 0,28 g einer 2,7 Gew.-%igen (bezogen auf elementares Platin) Lösung eines Platin-1,3-Divinyl-1,1,3,3-tetramethyldisiloxan-Komplexes in einem α,ω-Divinyldimethylpolysiloxan mit einer Viskosität von 1000 mPa·s bei 25°C, eine Lösung des sogenannten Karstedt-Katalysators (dessen Herstellung in US 3,775,452 beschrieben ist), zudosiert. Das Reaktionsgemisch erwärmt sich um ca. 6°C, worauf die gleiche Menge Katalysator nachdosiert wird. Das Reaktionsgemisch wird daraufhin homogen. Nach einer Stunde Reaktionszeit bei 100 bis 110°C wird eine Probe des Polyether-Polysiloxan-Zwischenproduktes abgekühlt, das eine Viskosität von 2 220 mm²/s bei 25°C aufweist.

Bei 100°C werden nun 45,5 g Hexamethylen-1,6-diisocyanat (1,0 Mol Isocyanatgruppe je Mol HO-Gruppe des Zwischenproduktes) zudosiert und die Urethanbildung wird mit 100 mg Di-n-butylzinndilaurat katalysiert. Nach zwei Stunden bei 100°C wird das klare Reaktionsprodukt abgekühlt. Es besitzt eine Viskosität von ca. 100 000 mPa·s bei 25°C.

40 g des hochviskosen Öls werden bei 50°C mit 60 g Wasser vermischt. Das Produkt ist leicht emulgierbar und bildet eine opaleszierende Microemulsion mit einem Urethangehalt von 0,14 mequ./g.

### Vergleichsversuch:

Beispiel 1 wird sinngemäß wiederholt, indem aber zum Vergleich eine andere Charge des Polyethers eingesetzt wird, die produktionsbedingt 3.620 ppm Wasser enthält. Auf den gesamten Ansatz bezogen, beträgt der Wassergehalt statt 636 ppm nun 2.350 ppm Wasser.

Bei der Umsetzung mit Hexamethylen-1,6-diisocyanat entsteht eine starke Schaumbildung. Nach Reaktionsende erhält man ein kaum noch rührbares Öl, das nach Einarbeitung der 1,5-fachen Menge Wasser (40% Ölgehalt) spontan keine Emulsion bildet. Langes Einbringen starker Scherkräfte mit einem Turraxgerät bildet ein trübes, inhomogenes Gemisch.

### Beispiel 2:

960 g des α,ω-Dihydrogenpolydimethylsiloxans mit einem Wassergehalt von 50 Gew.-ppm aus Beispiel 1 werden mit 536 g eines Polyethers der Formel

H₂C=CH-CH₂- (OCH₂CH₂)_{10,2}-OH ,

einem Wassergehalt von 686 Gew.-ppm gemischt und auf 100°C erwärmt. Dann werden 0,28 g der in Beispiel 1 beschriebenen Karstedt-Katalysatorlösung zugegeben, worauf die Temperatur des Reaktionsgemisches auf 19 °C ansteigt und ein klares Produkt entsteht. Nach einer Stunde bei 100 bis 110°C wird vollständiger Umsatz des Si-gebundenen Wasserstoffs erreicht.

Das Polyether-Polysiloxan-Zwischenprodukt hat eine Viskosität von 760 mm²/s bei 25°C.

Es werden nun 63 g N-Methyldiethanolamin (1,02 Mol HO-Gruppe je Mol HO-Gruppe des Polyethers)und 178 g Hexamethylendiisocyanat (0,99 Mol Isocyanatgruppe je Mol der Summe der HO-Gruppen des Zwischenproduktes und des N-Methyldiethanolamins) nacheinander zudosiert. Die Urethanbildung wird mit 100 mg Di-n-butylzinndilaurat katalysiert. Nach zwei Stunden bei 100°C wird abgekühlt und es werden bei 70°C 64 g Essigsäure zugegeben. Das klare, bräunliche Produkt besitzt eine Viskosität von 120 000 mPa·s bei 25°C.

40 g des hochviskosen Öls werden bei 50°C mit 60 g Wasser vermischt. Unter leichtem Rühren bildet sich eine Microemulsion mit einem Urethangehalt von 0,39 mequ./g und einer Aminzahl von 0,12 (Aminzahl entspricht der Anzahl von ml IN HCl, die zur Neutralisation von 1 g Substanz erforderlich ist).

### Beispiel 3:

1411 g des Allylalkoholethoxylats/propoxylats aus Beispiel 1 werden mit 813 g eines α,ω-Dihydrogenpolydimethylsiloxans mit 0,052 Gew.-% Si-gebundenem Wasserstoff vermischt und gut gerührt auf 100°C erwärmt. Nach identischer Katalyse erhält man nach einer Stunde Reaktionszeit ein Polyether-Polysiloxan-Zwischenprodukt mit einer Viskosität von 2.490 mm²/s bei 25°C.

Bei 100 °C werden 83 g N,N-Bis(3-dimethylaminopropyl-)N-isopropanolamin eingerührt und 92 g Hexamethylendiisocyanat zudosiert. Der Quotient aus NCO-Gruppen zu der Summe der damit reagierenden organischen Gruppen beträgt 0,995, unter Berücksichtigung des darin enthaltenen Wassers nur 0,87. Nach schwach exothermer Reaktion erwärmt man auf 120°C und lässt nach Zugabe von 50 mg Dibutylzinnlaurat bei gleichzeitigem Anstieg der Viskosität weitere 3 Stunden ausreagieren, bis im IR kein Isocyanat mehr nachgewiesen werden kann. Das bei 25°C sehr viskose Öl hat einen Gehalt an basischem Stickstoff von 0,42 mequ./g.

### Beispiel 4:

635 g des α,ω-Dihydrogenpolydimethylsiloxans aus Beispiel 3 werden mit 205 g eines Polyethers der Formel

H₂C=CH-CH₂- (OCH₂CH₂) _{9,5}-OH,

wie in Beispiel 2 umgesetzt. Das Polyether-Polysiloxan-Zwischenprodukt hat eine OH-Konzentration von 0,512 mequ./g und enthält 177 ppm Wasser.

200 g dieses Zwischenprodukts werden mit 10,3 g Bis-(dimethylaminopropyl)amin gemischt und auf 84°C erwärmt; 13,2 g Hexamethylendiisocyanat werden zudosiert.
Das Verhältnis der NCO-Gruppen zur Summe der damit reagierenden organischen Funktionen beträgt 0,998, bei Einbeziehung von Wasser 0,97.
Ohne weitere Katalyse wird in einer Stunde bei ca. 90°C in leicht exothermer Reaktion kompletter Umsatz der Isocyanatgruppen erreicht. Das Polymergemisch enthält 0,49 mequ. basischen Stickstoff pro Gramm.

32 g dieses Polymers werden mit einer Lösung von 1,04 g Essigsäure in 8 g Diethylenglycolmonobutylether, neutralisiert. Mit 60 g Wasser bildet sich nach Verrühren mit einem Spatel spontan eine schwach gelbliche Mikroemulsion.

### Beispiel 5:

200 g des in Beispiel 4 hergestellten Polyether-Polysiloxanzwischenproduktes (0,512 mequ. OH/g) werden mit zusätzlichen 26,2 g des zu seiner Synthese verwendeten Polyethers sowie 14,8 g Bis-(dimethylaminopropyl)amin versetzt und auf 80°C erwärmt. Die Zugabe von 19,8 g Hexamethylendiisocyanat startet sofort eine mäßig exotherme Reaktion, die nach ca. 2 Stunden bei 90°C beendet ist, und kein Isocyanat mehr nachgewiesen werden kann. Das Verhältnis von NCO zur Summe der damit reagierenden Gruppen (OH, NH) beträgt ohne die Einbeziehung von Wasser bereits 0,995; unter Berücksichtigung des enthaltenen Wassers nur 0,97.
Das hochviskose Polymergemisch hat eine Konzentration von basischem Stickstoff von 0,60 mequ./g.

Zur Herstellung einer Mikroemulsion werden 32 g dieses Produkts mit einer Lösung von 1,29 g Essigsäure in 8 g Diethylenglycolmonobutylether neutralisiert und danach mit 60 g Wasser verrührt.

### Beispiel 6:

200 g des in Beispiel 4 hergestellten Polyether-Polysiloxan-Zwischenproduktes (0,512 mequ. OH/g) werden nur mit 4,5 g Bis-(dimethylaminopropyl)amin ohne weitere Polyetherzusätze auf 88°C erwärmt. Die Zugabe von 10,6 g Hexamethylendiisocyanat startet eine leicht exotherme Reaktion. Das Verhältnis von NCO-Gruppen zur Summe der damit reagierenden organischen Funktionen beträgt 0,998, bei Berücksichtigung des im Reaktionsgemisch enthaltenen Wassers 0,97.

Nach 1 Stunde bei 100°C ist kein Isocyanat mehr nachweisbar. Das hochviskose Polymer hat einen Gehalt an basischem Stickstoff von 0,22 mequ./g.

Nach Neutralisation von 32 g basischem Produkt mit einer Lösung aus 0,46 g Essigsäure in 8 g Diethylenglycolmonotbutylether erhält man durch Einrühren von 60 g Wasser eine stabile Mikroemulsion.

## Patentansprüche

1. Hydrophile Siloxancopolymere herstellbar indem in einem ersten Schritt
Organopolysiloxane (1), die pro Molekül mindestens ein Si-gebundenes Wasserstoffatom aufweisen, mit
weitgehend linearen oligomeren oder polymeren Verbindungen (2) der allgemeinen Formel
R¹-(A-CₙH₂ₙ)ₘ-A¹-H (I),
wobei R¹ einen einwertigen gegebenenfalls substituierten Kohlenwasserstoffrest, an den Si-H-Gruppen in einer Hydrosilylierungsreaktion angelagert werden können, bedeutet,
A einen zweiwertigen, polaren organischen Rest ausgewählt aus der Gruppe von -O-, -C(O)-O-, -O-C(O)- , -O-C(O)-O- , -C(O)-NH- , -NH-C(O)- , Urethanrest und Harnstoffrest bedeutet,
A¹ einen zweiwertigen, polaren organischen Rest ausgewählt aus der Gruppe von -O-, -NH- und -NR'- (wobei R' einen einwertigen Kohlenwasserstoffrest mit 1 bis 18 Kohlenstoffatomen bedeutet) bedeutet,
n eine ganze Zahl von 1 bis 20 ist und
m eine ganze positive Zahl ist,
umgesetzt werden,
und in einem zweiten Schritt
die so erhaltenen H-A¹-Gruppen aufweisenden Zwischenprodukte (4) mit organischen Verbindungen (5), die pro Molekül mindestens zwei Isocyanatgruppen aufweisen, umgesetzt werden,
mit der Maßgabe, dass der Wassergehalt der zur Herstellung der hydrophilen Siloxancopolymere eingesetzten Verbindungen (1) und (2) niedriger ist als 2000 Gew.-ppm, jeweils bezogen auf das Gesamtgewicht von Verbindungen (1) und (2), und dass die organischen Verbindungen (5), die pro Molekül mindestens zwei Isocyanatgruppen aufweisen, in Mengen von 0,5 bis 1,0 Mol Isocyanatgruppe je Mol H-A¹-Gruppe im Zwischenprodukt (4) eingesetzt werden.

2. Hydrophile Siloxancopolymere nach Anspruch 1,
**dadurch gekennzeichnet, dass** als Organopolysiloxane (1) solche der allgemeinen Formel
H_{g}R_{3-g}SiO (SiR₂O)ₒ(SiRHO)ₚSiR_{3-g}H_{g} (III)
wobei R gleich oder verschieden sein kann und einen einwertigen, gegebenenfalls substituierten Kohlenwasserstoffrest mit 1 bis 18 Kohlenstoffatomen je Rest bedeutet,
g 0, 1 oder 2,
o 0 oder eine ganze Zahl von 1 bis 1500 und
p 0 oder eine ganze Zahl von 1 bis 200 ist,
mit der Maßgabe, dass pro Molekül mindestens ein Si-gebundenes Wasserstoffatom, vorliegt,
eingesetzt werden.

3. Hydrophile Siloxancopolymere nach Anspruch 2, **dadurch gekennzeichnet, dass** die Organopolysiloxane (1) α,ω-Dihydrogendiorganopolysiloxane sind.

4. Hydrophile Siloxancopolymere nach einem der Ansprüche 1 bis 3, **dadurch gekennzeichnet, dass** A und A¹ in Formel (I) ein Sauerstoffatom -O- sind.

5. Hydrophile Siloxancopolymere nach einem der Ansprüche 1 bis 4, **dadurch gekennzeichnet, dass** die Verbindung (2) ein Polyether der allgemeinen Formel
H₂C=CH-R²- (OCₙH₂ₙ)ₘ-OH (IV),
wobei R² ein zweiwertiger Kohlenwasserstoffrest mit 1 bis 10 Kohlenstoffatomen ist und
n und m die in Anspruch 1 angegebene Bedeutung haben, ist.

6. Hydrophile Siloxancopolymere nach einem der Ansprüche 1 bis 5, **dadurch gekennzeichnet, dass** die Verbindung (5) ein Diisocyanat der allgemeinen Formel
O=C=N-R³-N=C=O (V),
wobei R³ einen zweiwertigen Kohlenwasserstoffrest mit 4 bis 40 Kohlenstoffatomen je Rest bedeutet,
ist.

7. Hydrophile Siloxancopolymere nach einem der Ansprüche 1 bis 6, **dadurch gekennzeichnet, dass** im zweiten Verfahrensschritt als weitere Verbindung (7) solche ausgewählt aus der Gruppe der Formeln
R⁴-(A-CₙH₂ₙ)ₘ-A¹-H (VII),
HO-R⁵-NR⁴-R⁵-OH (VIII),
HO-R⁵-NR⁴₂ (IX),
HO-R⁶(NR⁴₂)₂ (X),
HO-R⁷(NR⁴₂)₃ (XI),
(HO)₂R⁶-NR⁴₂ (XII)
und
HNR⁴₂ (XIII)
wobei R⁴ ein Wasserstoffatom oder einen Rest R, der gegebenenfalls ein Stickstoffatom enthalten kann, bedeutet, R⁵ einen zweiwertigen Kohlenwasserstoffrest mit 1 bis 10 Kohlenstoffatomen je Rest bedeutet,
R⁶ einen dreiwertigen organischen Rest mit 1 bis 100 Kohlenstoffatomen je Rest, vorzugsweise einen dreiwertigen Kohlenwasserstoffrest mit 1 bis 100 Kohlenstoffatomen, der ein oder mehrere Sauerstoffatome enthält,
R⁷ einen vierwertigen organischen Rest mit 1 bis 100 Kohlenstoffatomen je Rest, vorzugsweise einen vierwertigen Kohlenwasserstoffrest mit 1 bis 100 Kohlenstoffatomen, der ein oder mehrere Sauerstoffatome enthält, und
A¹, n und m die im Anspruch 1 dafür angegebene Bedeutung haben,
mitverwendet werden.

8. Hydrophile Siloxancopolymere nach einem der Ansprüche 1 bis 7,
**dadurch gekennzeichnet, dass** es solche der allgemeinen Formel
CH₂=CH-R³- (OCₙH₂ₙ)ₘ-OC (O) NH-R²-NHC (O) O [ (CₙH₂ₙO)ₘ-R³-CH₂CH₂-R₂SiO (R₂SiO)ₒ-R₂SiO-CH₂CH₂-R³-(OCₙH₂ₙ)ₘ-OC (O) NH-R²-NHC(O)O]ₓ(CₙH₂ₙO)ₘ-R³-CH=CH₂ (VI),
wobei R gleich oder verschieden sein kann und einen einwertigen, gegebenenfalls substituierten Kohlenwasserstoffrest mit 1 bis 18 Kohlenstoffatomen je Rest bedeutet,
R² ein zweiwertiger Kohlenwasserstoffrest mit 1 bis 10 Kohlenstoffatomen,
R³ einen zweiwertigen Kohlenwasserstoffrest mit 4 bis 40 Kohlenstoffatomen je Rest bedeutet,
n eine ganze Zahl von 1 bis 20 ist und
m eine ganze positive Zahl ist,
o 0 oder eine ganze Zahl von 1 bis 1500 und
x 0 oder eine ganze Zahl von 1 bis 20 ist,
sind.

9. Verfahren zur Herstellung der hydrophilen Siloxancopolymere nach einem der Ansprüche 1 bis 8, **dadurch gekennzeichnet, dass** in einem ersten Schritt
Organopolysiloxane (1), die pro Molekül mindestens ein Si-gebundenes Wasserstoffatom aufweisen, mit
weitgehend linearen oligomeren oder polymeren Verbindungen (2) der allgemeinen Formel
R¹- (A-CₙH₂ₙ)ₘ-A¹-H (I),
wobei R¹ einen einwertigen gegebenenfalls substituierten Kohlenwasserstoffrest, an den Si-H-Gruppen in einer Hydrosilylierungsreaktion angelagert werden können, bedeutet,
A einen zweiwertigen, polaren organischen Rest ausgewählt aus der Gruppe von -O- , -C(O)-O- , -O-C(O)- , -O-C(O)-O-, -C(O)-NH- , -NH-C(O)- , Urethanrest und Harnstoffrest bedeutet,
A¹ einen zweiwertigen, polaren organischen Rest ausgewählt aus der Gruppe von -O- , -NH- und -NR'- (wobei R' einen einwertigen Kohlenwasserstoffrest mit 1 bis 18 Kohlenstoffatomen bedeutet) bedeutet,
n eine ganze Zahl von 1 bis 20 ist und
m eine ganze positive Zahl ist,
umgesetzt werden,
und in einem zweiten Schritt
die so erhaltenen H-A¹-Gruppen aufweisenden Zwischenprodukte (4) mit organischen Verbindungen (5), die pro Molekül mindestens zwei Isocyanatgruppen aufweisen, umgesetzt werden,
mit der Maßgabe, dass der Wassergehalt der zur Herstellung der hydrophilen Siloxancopolymere eingesetzten Verbindungen (1) und (2) niedriger ist als 2000 Gew.-ppm, jeweils bezogen auf das Gesamtgewicht von Verbindungen (1) und (2), und dass die organischen Verbindungen (5), die pro Molekül mindestens zwei Isocyanatgruppen aufweisen, in Mengen von 0,5 bis 1,0 Mol Isocyanatgruppe je Mol H-A¹-Gruppe im Zwischenprodukt (4) eingesetzt werden.

10. Emulsionen enthaltend
(A) hydrophile Siloxancopolymere nach einem der Ansprüche 1 bis 8, und
(B) Wasser.

11. Verfahren zur Herstellung der Emulsionen nach Anspruch 10 durch Vermischen von
(A) hydrophilen Siloxancopolymeren nach einem der Ansprüche 1 bis 8, mit
(B) Wasser.

## Claims

1. Hydrophilic siloxane copolymers preparable by a first step of reacting
organopolysiloxanes (1) which have at least one silicon-attached hydrogen atom per molecule with
substantially linear oligomeric or polymeric compounds (2) of the general formula
R¹- (A-CₙH₂ₙ)ₘ-A¹-H (I)
where R¹ is a univalent optionally substituted hydrocarbyl radical capable of adding Si-H groups in a hydrosilylation reaction,
A is a bivalent polar organic radical selected from the group consisting of -O-, -C(O)-O-, -O-C(O)-, -O-C(O)-O-, -C(O)-NH-, -NH-C(O)-, urethane radical and urea radical,
A¹ is a bivalent polar organic radical selected from the group consisting of -O-, -NH- and -NR'-(where R' is a univalent hydrocarbyl radical of 1 to 18 carbon atoms),
n is an integer from 1 to 20, and
m is a positive integer,
and a second step of reacting
the resulting H-A¹-containing intermediates (4) with organic compounds (5), which have two or more isocyanate groups per molecule,
with the proviso that the water content of the compounds (1) and (2), which are used for preparing the hydrophilic siloxane copolymers, is lower than 2000 weight ppm, in each case based on the total weight of compounds (1) and (2),
and in that the organic compounds (5), which have two or more isocyanate groups per molecule, are used in amounts of 0.5 to 1.0 mol of isocyanate group per mole of H-A¹ group in the intermediate (4).

2. Hydrophilic siloxane copolymers according to Claim 1 **characterized in that** said organopolysiloxanes (1) have the general formula
H_{g}R_{3-g}SiO (SiR₂O)ₒ(SiRHO)ₚSiR_{3-g}H_{g} (III)
where R in each occurrence may be the same or different and is a univalent optionally substituted hydrocarbyl radical having 1 to 18 carbon atoms per radical,
g is 0, 1 or 2,
o is 0 or an integer from 1 to 1500, and
p is 0 or an integer from 1 to 200,
with the proviso that there is at least one silicon-attached hydrogen atom per molecule.

3. Hydrophilic siloxane copolymers according to Claim 2 **characterized in that** said organopolysiloxanes (1) are α,ω-dihydrodiorganopolysiloxanes.

4. Hydrophilic siloxane copolymers according to any one of Claims 1 to 3 **characterized in that** A and A1 in the formula (I) are an oxygen atom -O-.

5. Hydrophilic siloxane copolymers according to any one of Claims 1 to 4 **characterized in that** the compound (2) is a polyether of the general formula
H₂C=CH=R²- (OCₙH₂ₙ)ₘ-OH (IV)
where R² is a bivalent hydrocarbyl radical of 1 to 10 carbon atoms and
n and m are each as defined in claim 1.

6. Hydrophilic siloxane copolymers according to any one of Claims 1 to 5 **characterized in that** the compound (5) is a diisocyanate of the general formula
O=C=N-R³-N=C=O (V)
where R³ is a bivalent hydrocarbyl radical having 4 to 40 carbon atoms per radical.

7. Hydrophilic siloxane copolymers according to any one of Claims 1 to 6 **characterized in that** the second step utilizes further compounds (7) selected from the group of the formulae
R⁴- (A-CₙH₂ₙ)ₘ-A¹-H (VII),
HO-R⁵-NR⁴-R⁵-OH (VIII),
HO-R⁵-NR⁴₂ (IX),
HO-R⁶(NR⁴₂)₂ (X),
HO-R⁷-(NR⁴₂)₃ (XI),
(HO)₂R⁶-NR⁴₂ (XII)
and
HNR⁴₂ (XIII)
where R⁴ is a hydrogen atom or an R radical which may optionally contain a nitrogen atom,
R⁵ is a bivalent hydrocarbyl radical of 1 to 10 carbon atoms per radical,
R⁶ is a tervalent organic radical having 1 to 100 carbon atoms per radical, preferably a tervalent hydrocarbyl radical having 1 to 100 carbon atoms, which contains one or more oxygen atoms,
R⁷ is a tetravalent organic radical having 1 to 100 carbon atoms per radical, preferably a tetravalent hydrocarbyl radical having 1 to 100 carbon atoms which contains one or more oxygen atoms, and
A¹, n and m are as defined in Claim 1.

8. Hydrophilic siloxane copolymers according to any one of Claims 1 to 7, **characterized in that** they are of the general formula
CH₂=CH-R³- (OCₙH₂ₙ)ₘ-OC(O) NH-R²-NHC(O)O[(CₙH₂ₙO)ₘ-R³-CH₂CH₂-R₂SiO (R₂SiO)ₒ-R₂SiO-CH₂CH₂-R³- (OCₙH₂ₙ)ₘ-OC(O) NH-R²-NHC(O)O]ₓ(CₙH₂ₙO)ₘ-R³-CH=CH₂ (VI),
where R in each occurrence may be the same or different and is a univalent optionally substituted hydrocarbyl radical having 1 to 18 carbon atoms per radical,
R² is a bivalent hydrocarbyl radical having 1 to 10 carbon atoms,
R³ is a bivalent hydrocarbyl radical having 4 to 40 carbon atoms per radical,
n is an integer from 1 to 20,
m is a positive integer,
o is 0 or an integer from 1 to 1500, and
x is 0 or an integer from 1 to 20.

9. Process for preparing the hydrophilic siloxane copolymers according to any one of Claims 1 to 8, **characterized in that** it comprises
a first step of reacting
organopolysiloxanes (1) which have at least one silicon-attached hydrogen atom per molecule with
substantially linear oligomeric or polymeric compounds (2) of the general formula
R¹- (A-CₙH₂ₙ)ₘ-A¹-H (I)
where R¹ is a univalent optionally substituted hydrocarbyl radical capable of adding Si-H groups in a hydrosilylation reaction,
A is a bivalent polar organic radical selected from the group consisting of -O-, -C(O)-O-, -O-C(O)-, -O-C (O) -O-, -C (O) -NH-, -NH-C(O)-, urethane radical and urea radical,
A¹ is a bivalent polar organic radical selected from the group consisting of -O-, -NH- and -NR'- (where R' is a univalent hydrocarbyl radical of 1 to 18 carbon atoms),
n is an integer from 1 to 20, and
m is a positive integer,
and a second step of reacting
the resulting H-A¹-containing intermediates (4) with organic compounds (5), which have two or more isocyanate groups per molecule,
with the proviso that the water content of the compounds (1) and (2), which are used for preparing the hydrophilic siloxane copolymers, is lower than 2000 weight ppm, in each case based on the total weight of compounds (1) and (2),
and **in that** the organic compounds (5), which have two or more isocyanate groups per molecule, are used in amounts of 0.5 to 1.0 mol of isocyanate group per mole of H-A¹ group in the intermediate (4).

10. Emulsions comprising
(A)hydrophilic siloxane copolymers according to any one of Claims 1 to 8, and
(B)water.

11. Process for producing the emulsions according to claim 10 by mixing of
(A)hydrophilic siloxane copolymers according to any one of Claims 1 to 8, with
(B)water.

## Revendications

1. Copolymères de siloxane hydrophiles pouvant être préparés par :
dans une première étape
mise en réaction d'organopolysiloxanes (1) qui comportent par molécule au moins un atome d'hydrogène lié à Si,
avec des composés oligomères ou polymères (2) essentiellement linéaires, de formule générale :
R¹- (A-CₙH₂ₙ)ₘ-A¹-H (I),
dans laquelle R¹ représente un radical hydrocarboné monovalent éventuellement substitué, auquel des groupes Si-H peuvent être fixés par addition dans une réaction d'hydrosilylation,
A représente un radical organique polaire bivalent, choisi dans l'ensemble constitué par -O-, -C(O)-O-, -O-C(O)-, -O-C(O)-O-, -C(O)-NH-, -NH-C(O)-, un radical uréthanne et un radical urée,
A¹ représente un radical organique polaire bivalent, choisi dans l'ensemble constitué par -O-, -NH- et - NR'- (R' représentant un radical hydrocarboné monovalent ayant de 1 à 18 atomes de carbone),
n est un nombre entier de 1 à 20, et
m est un nombre entier positif,
dans une deuxième étape
mise en réaction des produits intermédiaires (4) ainsi obtenus, comportant des groupes H-A¹, avec des composés organiques (5) qui comportent par molécule au moins deux groupes isocyanate,
étant entendu que la teneur en eau des composés (1) et (2) utilisés pour la préparation des copolymères de siloxane hydrophiles est inférieure à 2 000 ppm en poids, chaque fois par rapport au poids total des composés (1) et (2), et
les composés organiques (5), qui comportent par molécule au moins deux groupes isocyanate, étant utilisés en quantités de 0,5 à 1,0 mole de groupe isocyanate par mole de groupe H-A¹ contenu dans les produits intermédiaires (4).

2. Copolymères de siloxane hydrophiles selon la revendication 1, **caractérisés en ce qu'**on utilise en tant qu'organopolysiloxanes (1) ceux de formule :
H_{g}R_{3-g}SiO (SiR₂O) ₒ(SiRHO) ₚSiR_{3-g}H_{g} (III)
dans laquelle R peut être identique ou différent et représente un radical hydrocarboné monovalent, éventuellement substitué, ayant de 1 à 18 atomes de carbone par radical,
g est 0, 1 ou 2,
o est 0 ou un nombre entier de 1 à 1 500, et
p est 0 ou un nombre entier de 1 à 200,
étant entendu qu'au moins un atome d'hydrogène lié à Si est présent par molécule.

3. Copolymères de siloxane hydrophiles selon la revendication 2, **caractérisés en ce que** les organopolysiloxanes (1) sont des α,ω-dihydrogénodiorganopolysiloxanes.

4. Copolymères de siloxane hydrophiles selon l'une quelconque des revendications 1 à 3, **caractérisés en ce que** A et A¹ dans la formule (I) représentent un atome d'oxygène.

5. Copolymères de siloxane hydrophiles selon l'une quelconque des revendications 1 à 4, **caractérisés en ce que** le composé (2) est un polyéther de formule générale :
H₂C=CH-R²- (OCₙH₂ₙ)ₘ-OH (IV),
dans laquelle R² est un radical hydrocarboné bivalent ayant de 1 à 10 atomes de carbone, et
n et m ont les significations indiquées dans la revendication 1.

6. Copolymères de siloxane hydrophiles selon l'une quelconque des revendications 1 à 5, **caractérisés en ce que** le composé (5) est un diisocyanate de formule générale :
O=C=N-R³-N=C=O (V),
dans laquelle R³ est un radical hydrocarboné bivalent ayant de 4 à 40 atomes de carbone par radical.

7. Copolymères de siloxane hydrophiles selon l'une quelconque des revendications 1 à 6, **caractérisés en ce que** dans la deuxième étape (b) du processus on utilise, en outre, comme autre composé (7) un tel composé choisi dans l'ensemble des composés de formules :
R⁴-(A-CₙH₂ₙ)ₘ-A¹-H (VII),
HO-R⁵-NR⁴-R⁵-OH (VIII),
HO-R⁵-NR⁴₂ (IX),
HO-R⁶(NR⁴₂)₂ (X),
HO-R⁷(NR⁴₂)₃ (XI),
(HO)₂R⁶-NR⁴₂ (XII)
et
HNR⁴₂ (XIII),
dans lesquelles R⁴ représente un atome d'hydrogène ou un radical R qui peut éventuellement contenir un atome d'azote,
R⁵ représente un radical hydrocarboné bivalent ayant de 1 à 10 atomes de carbone par radical,
R⁶ représente un radical organique trivalent ayant de 1 à 100 atomes de carbone par radical, de préférence un radical hydrocarboné trivalent ayant de 1 à 100 atomes de carbone, qui contient un ou plusieurs atomes d'oxygène,
R⁷ représente un radical organique tétravalent ayant de 1 à 100 atomes de carbone par radical, de préférence un radical hydrocarboné tétravalent ayant de 1 à 100 atomes de carbone, qui contient un ou plusieurs atomes d'oxygène, et
A¹, n et m ont la signification indiquée à cet effet dans la revendication 1.

8. Copolymères de siloxane hydrophiles selon l'une quelconque des revendications 1 à 7, **caractérisés en ce que** ce sont ceux de formule générale:
CH₂=CH-R³-(OCₙH₂ₙ)ₘ-OC(O)NH-R²-NHC(O)O[(CₙH₂ₙO)ₘ-R³-CH₂CH₂-R₂SiO(R₂SiO)ₒ-R₂SiO-CH₂CH₂-R³-(OCₙH₂ₙ)ₘ-OC(O)NH-R²-NHC(O)O]ₓ(CₙH₂ₙO)ₘ-R³-CH=CH₂ (VI),
dans laquelle R peut être identique ou différent et représente un radical hydrocarboné monovalent éventuellement substitué, ayant de 1 à 18 atomes de carbone par radical,
R² représente un radical hydrocarboné bivalent ayant de 1 à 10 atomes de carbone,
R³ représente un radical hydrocarboné bivalent ayant de 4 à 40 atomes de carbone par radical,
n est un entier de 1 à 20, et
m est un entier positif,
o vaut 0 ou est un entier de 1 à 1 500, et
x vaut 0 ou est un entier de 1 à 20.

9. Procédé pour la préparation de copolymères de siloxane hydrophiles selon l'une quelconque des revendications 1 à 8, **caractérisé par** :
dans une première étape
mise en réaction d'organopolysiloxanes (1) qui comportent par molécule au moins un atome d'hydrogène lié à Si, avec
des composés oligomères ou polymères (2) essentiellement linéaires, de formule générale:
R¹- (A-CₙH₂ₙ)ₘ-A¹-H (I),
dans laquelle R¹ représente un radical hydrocarboné monovalent éventuellement substitué, auquel des groupes Si-H peuvent être fixés par addition dans une réaction d'hydrosilylation,
A représente un radical organique polaire bivalent, choisi dans l'ensemble constitué par -O-, -C(O)-O-, -O-C (O) -, -O-C (O) -O-, -C(O)-NH-, -NH-C (O) -, un radical uréthanne et un radical urée,
A¹ représente un radical organique polaire bivalent, choisi dans l'ensemble constitué par -O-, -NH- et
-NR'- (R' représentant un radical hydrocarboné monovalent ayant de 1 à 18 atomes de carbone),
n est un nombre entier de 1 à 20, et
m est un nombre entier positif, et
dans une deuxième étape
mise en réaction des produits intermédiaires (4) ainsi obtenus, comportant des groupes H-A¹, avec des composés organiques (5) qui comportent par molécule au moins deux groupes isocyanate,
étant entendu que la teneur en eau des composés (1) et (2) utilisés pour la préparation des copolymères de siloxane hydrophiles est inférieure à 2 000 ppm en poids, chaque fois par rapport au poids total des composés (1) et (2), et
les composés organiques (5), qui comportent par molécule au moins deux groupes isocyanate, étant utilisés en quantités de 0,5 à 1,0 mole de groupe isocyanate par mole de groupe H-A¹ contenu dans les produits intermédiaires (4).

10. Emulsions contenant :
(A) des copolymères de siloxane hydrophiles selon l'une quelconque des revendications 1 à 8, et
(B) de l'eau.

11. Procédé pour la préparation des émulsions selon la revendication 10, par mélange:
(A) de copolymères de siloxane hydrophiles selon l'une quelconque des revendications 1 à 8, avec
(B) de l'eau.
